# EUROPÄISCHE PATENTSCHRIFT

(11) **EP 2 825 936 B1**
(45) Veröffentlichungstag und Bekanntmachung des Hinweises auf die Patenterteilung: **31.05.2017**
(21) Anmeldenummer: 13718775.3
(22) Anmeldetag: 08.03.2013
(51) Int. Cl.: G06F 3/03, G06F 3/041, G06F 3/0354

(54) **COMPUTERANLAGE UND EIN STEUERUNGSVERFAHREN DAFÜR**
COMPUTER SYSTEM AND CONTROL METHOD THEREFOR
INSTALLATION INFORMATIQUE ET PROCÉDÉ DE COMMANDE DE CELUI-CI

(30) Priorität: 12.03.2012 AT 3002012
(43) Veröffentlichungstag der Anmeldung: 21.01.2015
(73) Patentinhaber: Isiqiri Interface Technologies GmbH, 4232 Hagenberg (AT)
(72) Erfinder: KOEPPE, Robert, A-4020 Linz (AT)
(74) Vertreter: Burgstaller, Peter
(86) Internationale Anmeldenummer: PCT/AT2013/050061
(87) Internationale Veröffentlichungsnummer: WO 2013/134806

(56) Entgegenhaltungen:
- DE-A1- 19 846 762
- US-A- 5 831 597
- US-A1- 2005 200 595
- US-A1- 2011 304 545
- "FORCE SENSING MOUSE PAD", IBM TECHNICAL DISCLOSURE BULLETIN, INTERNATIONAL BUSINESS MACHINES CORP. (THORNWOOD), US, vol. 34, no. 7A, 1 December 1991 (1991-12-01), pages 224-226, XP000255525, ISSN: 0018-8689

## Beschreibung

Die Erfindung betrifft eine Computeranlage und ein Steuerungsverfahren dafür.

Die erfindungsgemäße Computeranlage weist eine Datenverarbeitungseinheit, eine berührungssensitive, positionsauflösende Eingabefläche und ein frei bewegliches Eingabegerät auf, mit welchem zwecks Eingabe an die Datenverarbeitungseinheit die Eingabefläche zu berühren ist.

In der EP 1050015 B1 ist ein gängiges Prinzip für eine sogenannte "optische Computermaus" beschrieben. Das Eingabegerät wird an einer Oberfläche gleitend geführt bewegt. Es beleuchtet einen kleinen Flächenbereich der Oberfläche, nimmt Bilder des beleuchteten Flächenbereichs auf und errechnet anhand der Verschiebung von zeitlich nacheinander aufgenommenen, als gleich erkannten Bildelementen, die stattgefundene Positionsverschiebung. Das Gerät ist gut dazu geeignet von einem Punkt aus die relative Verschiebung des Eingabegerätes an einer Fläche zu messen. Wenn das Gehäuse in der Gestalt eines Schreibstiftes ausgeführt wird, können damit auch die Bewegungen, welche beim Schreiben in Handschrift erforderlich sind, gut ausgeführt werden und damit Handschrift schon während des Schreibvorganges erfasst werden.

Die US 4,464,652 A zeigt eine sogenannte "mechanische Computermaus". Dabei rollt eine Kugel mit einem aus einem Gehäuse herausragenden Teil ihrer Oberfläche auf einer Fläche ab. Die Verdrehung der Kugel gegenüber dem Gehäuse um zwei normal zueinander stehende Achsen wird gemessen und als Information über die Änderung zweier Koordinaten ausgegeben.

In der US 5, 371, 516 A wird das beschriebene Prinzip der "mechanischen Computermaus" an einem Gerät verwirklicht, welches etwa die Form eines Schreibstiftes hat, wobei die Kugel relativ klein ist und an der Spitze angeordnet ist. Man kann damit besser als mit Computermäusen üblicher Form, die Linien von Handschrift oder Handskizzen in einen Computer eingeben.

Eine Computermaus im Sinne dieses Dokumentes ist ein mit einer Datenverarbeitungseinheit in Datenübertragungsverbindung stehendes frei bewegliches Eingabegerät, welches Relativverschiebung zu einer Fläche an welcher es entlang bewegt wird, mittels eines Positionsänderungssensors in zwei Koordinaten misst und die Messdaten an die Datenverarbeitungseinheit überträgt. Eine solche "optische Computermaus" kann auch stiftartig ausgeführt sein, wie es beispielsweise in der CN 101751146 A gezeigt wird. Die WO 2007046604 A1 zeigt ein Eingabegerät, welches etwa die Form eines Schreibstiftes aufweist. Es enthält mehrere voneinander unabhängige Sensoreinrichtungen für die Messung einer Positionsveränderung. Eine Sensoreinrichtung basiert auf dem Prinzip der "optischen Computermaus" (wie oben besprochen), weitere Sensoreinrichtungen sind Inertialsensoren. Dadurch ist das Eingabegerät auch dann funktionstüchtig, wenn es von einer Oberfläche abgehoben ist. Durch einen Berührungssensor wird erfasst ob das Gerät an einer Oberfläche anliegt oder nicht. Wenn es an der Oberfläche anliegt wird automatisch auf den Betriebszustand "optischen Computermaus" gestellt, wobei man insbesondere Handschrift oder Handzeichnungen sehr gut schon während des Entstehens einlesen kann.

Die WO 2010006348 A1 und die WO 2010118450 A1 zeigen eine Computeranlage, welche durch eine lichtempfindliche positionssensitive Eingabefläche zu steuern ist. Die Eingabefläche ist ein flächiger Lichtwellenleiter und das bewegliche Eingabegerät ist ein Zeigegerät, welches einen Lichtstrahl aussendet. Das von dem Zeigegerät auf der Eingabefläche auftreffende Licht ruft durch Lumineszenz langwelligeres Licht in der Wellenleitermode hervor, dessen Intensität mit der Entfernung zum Auftreffpunkt des verursachenden Lichtes abnimmt. An mehreren Stellen an der Eingabefläche sind kleinflächige fotoelektrische Sensoren angebracht, an welchen elektrische Signale generiert werden, deren Signalstärke von der lokalen Intensität des Lichtes in der Wellenleitermode abhängig ist und von welchen auf den Auftreffpunkt des verursachenden Lichtes rückgeschlossen wird. Indem die Eingabefläche auch Ausgabefläche für durch die Datenverarbeitungseinheit ausgegebene Bildinformation sein kann, kann durch das Zeigegerät die absolute Position einer Bearbeitungsmarkierung (eines "Cursors") auch aus der Entfernung gut festgelegt werden. Kleine Bewegungen der Bearbeitungsmarkierung, wie sie beispielsweise dann auftreten, wenn mit Hilfe des Zeigegerätes, welches die Form eines Schreibstiftes haben kann, an der Eingabefläche "handgeschrieben" wird, sind aber nur dann gut messtechnisch erfassbar, wenn die Eingabefläche eine sehr hohe Positionsauflösung ermöglicht. Insbesondere bei Eingabeflächen die ausreichend groß sind um auch als Ausgabefläche der Datenverarbeitungseinheit für die Präsentation vor einem größeren Auditorium zu dienen, ist eine derart hohe Positionsauflösungsfähigkeit nur mit sehr hohem Hardwareaufwand bereitstellbar.

Eine berührungssensitive, positionsauflösende Eingabefläche im Sinne dieses Dokuments ist eine Fläche, welche derart mit Sensoren ausgestattet ist, dass sie, sobald sie durch einen Gegenstand berührt wird, ein Sensorsignal an eine Datenverarbeitungseinheit liefert, welches aussagt, dass sie berührt wird und welche Positionskoordinaten der Berührungspunkt auf ihr hat. Üblicherweise werden aus den an die Datenverarbeitungseinheit mitgeteilten Positionskoordinaten durch die Datenverarbeitungseinheit die Koordinaten einer Bearbeitungsmarkierung (zumeist als "Cursor" bezeichnet) auf einer durch die Datenverarbeitungseinheit angesteuerten Anzeigefläche errechnet und die Bearbeitungsmarkierung auf der Anzeigefläche dementsprechend positioniert.

Es gibt eine Fülle von Vorschlägen und ausgereiften Techniken dazu, berührungssensitive, positionsauflösende Eingabeflächen zu realisieren. Ebenso gibt es eine Fülle von Vorschlägen und ausgereiften Techniken dazu, eine Computermaus durch die Kombination aus einer berührungssensitiven, positionsauflösenden Eingabefläche und einem Stift zu ersetzen. Anstatt durch Bewegen einer Maus auf einer Fläche Positionsänderungsdaten zu generieren und an eine Datenverarbeitungseinheit einzulesen, werden dazu die Koordinaten des Berührungspunktes des Stiftes (oder auch eines Fingers) mit der Eingabefläche gemessen und an die Datenverarbeitungseinheit eingelesen. Beispiele dazu zeigen die Schriften DE 10110744 A1, US 6128007 A, DE 9316194 U1, GB 2266038 A, US 2004150632 A1, WO 2005096217 A1, KR 100859010 B1 und die CN101520696 A. Die CN 101520696 A zeigt dabei ein stiftartiges Eingabegerät für eine solche positionssensitive Eingabefläche, wobei dieses Eingabegerät zusätzlich Tasten aufweist, wie sie typischerweise bei konventionellen Computermäusen auch vorgesehen sind ("Rechtsklick"; "Linksklick"). Im Gegensatz zur Computermaus besitzt das Eingabegerät der CN 101520696 (A) keine eigenen Mittel zur Positionsdetektion. Die Positionsermittlung erfolgt wie bei Eingabe mit einem Stift oder dem Finger nur über die Eingabefläche. Die DE19846762 A1 zeigt ein ähnliches Eingabegerät für die Dateneingabe an einem Touchscreen, bzw. einer berührungssensitiven Eingabefläche. Das Eingabegerät weist in Kombination mit der Eingabefläche die Funktion einer Computermaus auf. Das Eingabegerät ist jedoch, wie bei den vorgenannten Schriften, keine Computermaus, da es selbst keine Mittel zur relativen Positionsdetektion aufweist. Die Positionsdetektion erfolgt rein über die Eingabefläche. Zur Dateneingabe ist eine Eingabevorrichtung mit Signalerzeugungsmitteln versehen, deren Signale von der Anzeigefläche detektiert werden. Somit kann zwar der Benutzer mit der Eingabevorrichtung wie mit einer Computermaus auf der Anzeigefläche verfahren, jedoch ist die Eingabevorrichtung keine Computermaus, ist insbesondere nicht mit Sensoren zur Detektion von relativen Positionsdaten ausgestattet und kann somit auch keine solchen relativen Positionsdaten an eine Datenverarbeitungsanlage übermitteln. Die US 2005/200595 A1 zeigt ein stiftförmiges Eingabegerät, welches ähnlich des Eingabegeräts der CN 101520696 (A) ist, wobei das Eingabegerät der US 2005/200595 A1 zudem an der Spitze eine Gleitkugel aufweist, um gleich einem Kugelschreiben über die Oberfläche der Eingabefläche zu gleiten bzw. zu rollen. Die Gleitkugel kann zur Ausübung einer Klickfunktion etwas in den Stift hineingedrückt werden, wobei das Eingabegerät mit einer Datenverarbeitungsanlage in Verbindung steht, um Klick-Daten der Gleitkugel und gegebenenfalls die Klick-Daten von zusätzlichen Tasten an die Datenverarbeitungsanlage zu übermitteln. Eine relative Positionsdetektion des Eingabegeräts, beispielsweise durch Erfassen der Drehbewegung der Gleitkugel und Senden dieser Informationen an die Datenverarbeitungsanlage ist in der US 2005/200595 A1 nicht explizit offenbart.

Gegenüber einer echten Computermaus besteht der Vorteil, dass die absolute Position eines Cursors unmittelbar festlegbar ist, weil sie einfach entsprechend einer fixen Regel der absoluten Position des Berührungspunktes des Stiftes bzw. Fingers mit der Eingabefläche zugeordnet werden kann.

Nachteilig ist, dass die Sensitivität für kleine Verschiebungen des Berührungspunktes durch die Positionsauflösungsfähigkeit der Eingabefläche begrenzt ist.

Im IBM Technical Disclosure Bulletin Vol. 34 No. 7a, Dec. 1991 ist ein Force Sensing Mousepad beschrieben, welches eine Kraftmessplatte verwendet, um die von der Computermaus ausgeübte Kraft zu messen. Dazu werden vier Kraftsensoren an den Ecken des als starre Platte ausgeführten Mousepads angebracht, wodurch bei einzelner Auswertung aller vier Kraftsensoren die Position der Maus auf der starren Platte sehr grob bestimmt werden kann. Nachteilig ist, dass das Force Sensing Mouse Pad technisch eine kraftsensitive Platte, aber keine berührungssensitive, positionsauflösende Eingabefläche im Sinne eines Touchpads, jedenfalls nicht eines Touchscreens darstellt, da es selbst nicht zum Setzen von absoluten Bearbeitungsmarkierungen für eine Datenverarbeitungsanlage geeignet ist.

Die US 5,831,597 A zeigt ein Mousepad, das eine berührungssensitive Zone im Sinne eines Touchpads aufweist. In dieser Zone sind berührungssensitive Elemente in Form von Tastern vorhanden. Es ist aber auch beschrieben, dass diese als Schieber (Eingabe entlang einer Achse) oder als x-y Steuerung ausgeführt sein können, um eine Maus ersetzen zu können. Die x-y Steuerung stellt somit ein Touchpad innerhalb der berührungssensitiven Zone dar. In der US 5,831,597 A ist angeführt, dass die Messergebnisse der Elemente der berührungssensitiven Zone ignoriert werden können, wenn die Maus in diesen berührungssensitiven Bereich hineinverschoben wird. Eine Eingabe mit der Maus an den berührungssensitiven Elementen wird daher nicht angestrebt. Die US 2011/0304545 A1 beschreibt die Kombination einer Computermaus mit einer berührungssensitiven Eingabefläche im Sinne eines Touchpads. Von der berührungssensitiven Eingabefläche werden Berührungen eines zusätzlichen Objekts (z.B. Finger) wahrgenommen, wobei Bewegungen des Objekts relativ zur Maus erkannt werden und diese in Steuerungsbefehle für die Datenverarbeitungsanlage übersetzt werden. Es ist nicht offenbart, ob die Position der Maus auf der berührungssensitiven Eingabefläche detektiert wird und was mit dieser Information geschehen sollte, sollte diese tatsächlich bestimmt werden.

Häufig wird als berührungssensitive, positionsauflösende Eingabefläche ein Touchscreen verwendet, also eine Fläche, welche neben der besprochenen Sensorfunktion auch die Funktion einer Anzeigefläche für eine Datenverarbeitungseinheit innehat. Insbesondere bei besonders großen Touchscreens wird aus Gründen der Leistbarkeit keine allzu feine Positionsauflösungsfähigkeit installiert. Dann kann es zu stark störenden Beschränkungen vor allem bei der Eingabe von Handschrift oder beim Erstellen feiner Handzeichnungen kommen. Aus mangelhafter Positionsauflösungsfähigkeit heraus ergibt sich oftmals die zusätzliche Schwierigkeit, dass durch die Datenverarbeitungseinheit nicht erkennbar ist, ob ein oder mehrere Berührungspunkte auf der Eingabefläche vorliegen, ob also durch einen oder mehrere Stifte beispielsweise "geschrieben" oder "gezeichnet" wird.

Die der Erfindung zu Grunde liegende Aufgabe besteht darin, die Positionsauflösungsfähigkeit bei der Eingabe mittels Eingabefläche zu verbessern ohne dafür die Eingabefläche vermehrt mit Sensoren ausstatten zu müssen.

Für das Lösen der Aufgabe wird das erfindungsgemäße Verfahren gemäß Anspruch 1 für den Betrieb einer Computeranlage vorgeschlagen. Bei der erfindungsgemäßen Lösung kann als frei bewegliches Eingabegerät, mit welchem die berührungssensitive, positionsauflösende Eingabefläche zwecks Eingabe an die Datenverarbeitungseinheit zu berühren ist, eine Computermaus (Definition "Computermaus" siehe weiter oben) verwendet werden, deren generierten Daten in die Datenverarbeitungseinheit eingelesen werden.

Die heutzutage kostengünstig und in ausgezeichneter, technisch ausgereifter Qualität erhältlichen Computermäuse (Definition "Computermaus" siehe weiter oben) haben verglichen mit großen Touchscreens eine sehr gute Positionsauflösungsfähigkeit und sie sind, verglichen mit anderen, vergleichbar leistungsfähigen Positionssensoren sehr kostengünstig.

Indem die Eingabefläche positionsauflösend berührungsempfindlich ist, ist an ihr die Position einer Eingabemarkierung unmittelbar festlegbar und detektierbar, ohne dass die Eingabemarkierung wie bei einer Computermaus erst von einem Anzeigenrand her passend ausgerichtet werden muss.

Indem das frei bewegliche Eingabegerät selbst einen Positionsänderungssensor mit hoher Positionsauflösungsfähigkeit aufweist, sind Positionsänderungen welche für das Positionsauflösungsvermögen der sensitiven Eingabefläche zu fein sind, auch gut erfassbar.

Bevorzugt weist die Computermaus die Form eines Stiftes auf, wobei der Positionsänderungssensor an einer Spitze des Stiftes angeordnet ist. Damit kann die Computermaus durch eine sie benutzende Person komfortabel wie ein Schreib- oder Zeichenstift bewegt werden. Handzeichnungen und Handschriften sind damit komfortabel schon während des Aufbringens auf die Eingabefläche unabhängig von der Positionsauflösungsfähigkeit der Eingabefläche gut in die Datenverarbeitungseinheit einlesbar.

Bevorzugt weist die Computermaus eine Sensorfunktion auf, durch welche detektiert wird, ob sie an einer Fläche anliegt oder nicht. Fast alle heutzutage im Handel erhältlichen Computermäuse weisen eine derartige Sensorfunktion auf, weswegen auf die genaue technische Ausführung hier nicht eingegangen werden muss. Wenn die Computermaus auf die Eingabefläche aufgesetzt wird, wird damit an die Datenverarbeitungseinheit sowohl durch die Computermaus als auch durch die Eingabefläche eine Information gesandt. Die von der Computermaus gesendete Information besagt, dass die Computermaus mit einer Fläche in Berührung gekommen ist. Die von der Eingabefläche gesendete Information beschreibt die Koordinaten eines soeben entstandenen Berührungspunktes. Durch die zeitliche Nähe des Eintreffens der beiden Informationen bei der Datenverarbeitungseinheit ist für diese erkennbar, dass sich genau die sendende Computermaus an dem bestimmten Berührungspunkt befindet. Damit sind im Fall der zeitlich überlappenden Verwendung mehrerer Computermäuse an der gleichen Datenverarbeitungseinheit und an der gleichen Eingabefläche für die Datenverarbeitungseinheit die einzelnen Computermäuse sehr gut unterscheidbar und eindeutig erkennbar.

Auch bei der Verschiebung der Berührungspunkte mehrerer Computermäuse auf der Eingabefläche bleiben die einzelnen Computermäuse für die Datenverarbeitungseinheit eindeutig erkennbar, da betreffend jeder Computermaus durch die Eingabefläche laufend absolute Positionsdaten gesendet werden und relative Positionsänderungsdaten durch die Computermäuse selbst laufend gesendet werden und da die beiden Daten miteinander korrelieren müssen, also zu gleichen Zeiten etwa gleiche Orte und etwa gleiche Bewegungsrichtungen beschreiben müssen.

In der am meisten bevorzugten Ausführungsform weist die Computermaus einen optischen Sensor für Positionsänderungen gegenüber einer Fläche an welcher sie entlang gleitet auf. (Das diesbezügliche Sensorprinzip ist beispielsweise in der eingangs erwähnten EP 1050015 B1 beschrieben.) Es ist aber beispielsweise auch das Prinzip der eingangs erwähnten US 5,371,516 A durchaus dafür sinnvoll, wonach eine "mechanische Computermaus" in der äußeren Form eines Schreibstiftes verwirklicht wird.

Im Sinne dieses Dokuments und damit auch im Sinne des vorliegenden Erfindungsgedankens sind auch solche Eingabeflächen als berührungssensitive, positionsauflösende Eingabeflächen anzusehen, welche streng genommen nicht direkt die Berührung durch einen Gegenstand detektieren, sondern nur das sehr nahe Annähern eines Gegenstandes an einen Punkt auf ihrer Oberfläche. Beispielsweise kann eine derartige "berührungssensitive" ortsauflösende Eingabefläche realisiert sein, indem knapp vor ihr und parallel zu ihr ausgerichtet ein Lichtvorhang (also ein von der Linienform in die Flächenform erweiterter Lichtschranken) angeordnet ist, welchen ein Gegenstand zwangsweise durchdringt, also unterbricht, wenn er die Eingabefläche berührt.

Die Erfindung wird an Hand einer Skizze veranschaulicht:

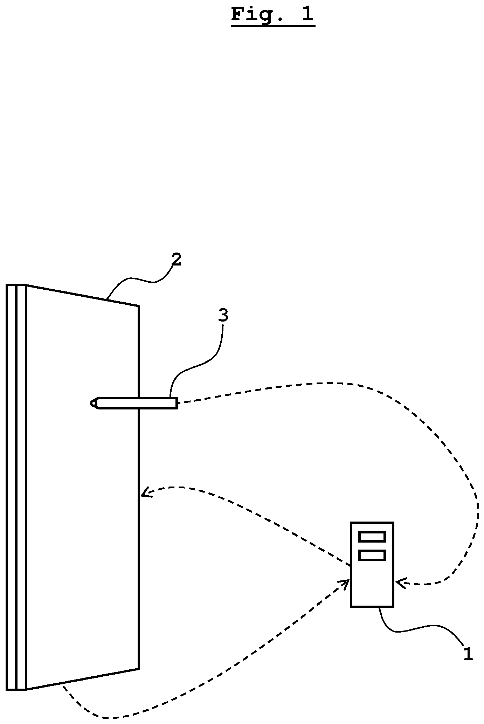

- Fig. 1:: zeigt die für das Verständnis der Erfindung wesentlichen Geräte einer beispielhaften erfindungsgemäßen Computeranlage. Datenverbindungen sind als mit einem Richtungssymbol versehene strichlierte Linien dargestellt.

Die in Fig. 1 dargestellte Computeranlage weist eine Datenverarbeitungseinheit 1, eine als Touchscreen ausgeführte Eingabefläche 2 und eine Computermaus 3 auf.

In der Datenverarbeitungseinheit 1 generierte Bildinformation wird über die als Touchscreen ausgeführte Eingabefläche 2 ausgegeben. Steuerinformation an die Datenverarbeitungseinheit 1 wird sowohl von der Eingabefläche 2, als auch von der Computermaus 3, generiert und an die Datenverarbeitungseinheit 1 gesendet.

Vorteilhafterweise werden während der Eingabe an die Datenverarbeitungseinheit 1 in regelmäßigen Abständen mit Hilfe von mathematischen Interpolationsverfahren die durch die Eingabefläche 2 an die Datenverarbeitungseinheit 1 gesendeten Informationen, die absolute Position der Computermaus 3 betreffenden Daten mit den von der Computermaus 3 gesendeten Daten abgeglichen, welche die relativen Positionsänderungen der Computermaus betreffen. Gute Interpolationsverfahren sind beispielsweise gut durch Versuch zu ermitteln. Ziel und Ergebnis dieses Abgleichs ist das Festlegen der Position der Bearbeitungsmarkierung so, dass diese Position einen guten Kompromiss zwischen der durch die Eingabefläche gemessenen Position der Computermaus und der durch die Computermaus selbst gemessenen Position der Computermaus darstellt. Wenn dies gelingt ist die Bearbeitungsmarkierung auch bei langen, durchgehenden Eingabevorgängen immer in der Nähe der Spitze der Computermaus 3 und macht dennoch kleine feine Bewegungen der Computermaus 3 gut mit.

## Patentansprüche

1. Verfahren für den Betrieb einer Computeranlage, welche eine Datenverarbeitungseinheit (1), eine damit in Datenverbindung stehende, berührungssensitive, positionsauflösende Eingabefläche (2) und zumindest ein frei bewegliches Eingabegerät (3) mit der Funktionalität einer Computermaus aufweist, wobei die Eingabefläche (2) die Absolutposition von Berührungspunkten auf der Eingabefläche (2) detektiert und wobei das zumindest eine frei bewegliche Eingabegerät (3) bei Bewegung entlang einer Oberfläche seine relativen Positionsänderungen entlang der Oberfläche mittels eines Positionsänderungssensors in zwei Koordinaten detektiert und mit der Datenverarbeitungseinheit (1) in Datenverbindung steht, wobei weiterhin,
- sobald die Eingabefläche (2) mit dem zumindest einen Eingabegerät (3) zwecks Eingabe an die Datenverarbeitungseinheit (1) berührt wird, diese ein Sensorsignal an die Datenverarbeitungseinheit (1) liefert, welches aussagt, dass sie berührt wird und welche Positionskoordinaten der Berührungspunkt auf ihr hat und bei Verschiebung des Berührungspunkts durch die Eingabefläche (2) laufend absolute Positionsdaten des Berührungspunktes an die Datenverarbeitungseinheit (1) gesendet werden,
- das zumindest eine frei bewegliche Eingabegerät (3) bei Verschiebung an einer Oberfläche laufend seine relativen Positionsänderungsdaten an die Datenverarbeitungseinheit (1) sendet,
**dadurch gekennzeichnet, dass**
- die Datenverarbeitungseinheit (1) ein frei bewegliches Eingabegerät einem Berührungspunkt auf der Eingabefläche (2) durch Festlegen einer Bearbeitungsmarkierung zuordnet, wenn
- das Auftreten des Berührungspunktes auf der Eingabefläche (2) mit dem Auftreten eines Signals des zumindest einen frei beweglichen Eingabegeräts (3) zeitlich korreliert und wenn bei Verschiebung des Berührungspunktes die laufend gesendeten absoluten Positionsdaten des Berührungspunktes der Eingabefläche (2) mit den vom frei beweglichen Eingabegerät (3) laufend gesendeten relativen Positionsänderungsdaten korrelieren,
- wobei nach Festlegen der Bearbeitungsmarkierung deren Position durch die Datenverarbeitungseinheit (1) laufend bestimmt wird, indem die durch die Eingabefläche(2) an die Datenverarbeitungseinheit (1) gesendeten Daten mit den von dem zumindest einen frei beweglichen Eingabegerät (3) gesendeten Daten abgeglichen werden.

2. Verfahren nach Anspruch 1, **dadurch gekennzeichnet, dass** das frei bewegliche Eingabegerät die Form eines Stiftes aufweist.

3. Verfahren nach Anspruch 1 oder Anspruch 2, **dadurch gekennzeichnet, dass** das frei bewegliche Eingabegerät eine Sensorfunktion aufweist, durch welche detektierbar ist, ob das frei bewegliche Eingabegerät an einer Fläche anliegt oder nicht.

4. Verfahren nach einem der Ansprüche 1 bis 3, **dadurch gekennzeichnet, dass** bei Verschiebung der Berührungspunkte mehrerer frei beweglicher Eingabegeräte auf der Eingabefläche (2) diese laufend die absoluten Positionsdaten dieser mehreren Berührungspunkte sendet.

5. Verfahren nach einem der Ansprüche 1 bis 4, **dadurch gekennzeichnet, dass** das frei bewegliche Eingabegerät einen Positionsänderungssensor mit einer Positionsauflösungsfähigkeit aufweist, die höher ist als jene der Eingabefläche (2), sodass Positionsänderungen erfasst werden, welche für die Positionsauflösungsfähigkeit der Eingabefläche (2) zu fein sind.

6. Verfahren nach einem der Ansprüche 1 bis 5, **dadurch gekennzeichnet, dass** die berührungssensitive, positionsauflösende Eingabefläche (2) ein Touchscreen ist.

7. Verfahren nach einem der Ansprüche 1 bis 6, **dadurch gekennzeichnet, dass** während der Eingabe an die Datenverarbeitungseinheit (1) in regelmäßigen zeitlichen Abständen die durch die Eingabefläche (2) gemessene Absolutposition des frei beweglichen Eingabegeräts mit jener Position verglichen wird, welche sich aus den Ergebnissen der durch das Eingabegerät gemessenen Positionsinformationen errechnet, dass durch die Datenverarbeitungseinheit (1) den beiden Positionen durch mathematische Interpolation eine beide Positionen gemeinsam repräsentierende dritte Position zugeordnet wird, welche zu den beiden ersten Positionen weniger beabstandet ist als die beiden ersten Positionen untereinander, dass dieser dritten Position durch die Datenverarbeitungseinheit (1) eine Bearbeitungsmarkierung zugeordnet wird und dass diese dritte Position als Startpunkt für die Berechnung der zeitlich nächstfolgenden Bewegung des frei beweglichen Eingabegeräts angenommen wird.

8. Verfahren nach einem der Ansprüche 1 bis 7, **dadurch gekennzeichnet, dass** die Eingabefläche (2) mit zumindest zwei frei beweglichen Eingabegeräten berührt wird, wobei auch das zweite und jedes weitere frei bewegliche Eingabegerät Relativverschiebungen zu einer Fläche, an welcher es entlang bewegt wird, mittels eines Positionsänderungssensors in zwei Koordinaten misst und mit der Datenverarbeitungseinheit (1) in Datenverbindung steht, wobei die Datenverarbeitungseinheit (1) die frei beweglichen Eingabegeräte jeweils jenem von der berührungssensitiven, positionsauflösenden Eingabefläche (2) detektierten Berührungspunkt zuordnet, dessen Auftreten zeitlich mit dem Auftreten eines Signals des jeweiligen frei beweglichen Eingabegeräts zusammenfällt.

9. Verfahren nach Anspruch 8 **dadurch gekennzeichnet, dass** die Eingabefläche (2) mit zumindest zwei frei beweglichen Eingabegeräten berührt wird, wobei auch das zweite und jedes weitere frei bewegliche Eingabegerät Relativverschiebungen zu einer Fläche, an welcher es entlang bewegt wird, mittels eines Positionsänderungssensors in zwei Koordinaten misst und mit der Datenverarbeitungseinheit (1) in Datenverbindung steht, wobei die Datenverarbeitungseinheit (1) die frei beweglichen Eingabegeräte jeweils jenem von der berührungssensitiven, positionsauflösenden Eingabefläche (2) detektierten Berührungspunkt zuordnet, dessen laufend gesendeten absoluten Positionsdaten der Eingabefläche (2) mit den vom jeweiligen frei beweglichen Eingabegerät laufend gesendeten relativen Positionsänderungsdaten korrelieren.

## Claims

1. Method for the operation of a computer system which comprises a data processing unit (1), a data-connected, touch-sensitive, position-resolving input surface (2) and at least one freely movable input device (3) with the functionality of a computer mouse, wherein the input surface (2) detects the absolute position of touch points on the input surface (2) and wherein at least one freely movable input device (3) detects, by movement along a surface, its relative positional changes along the surface by means of a position change sensor in two coordinates and is data-connected to the data processing unit (1), wherein
- as soon as the input surface (2) is touched with at least one input device (3) for the purpose of providing input to the data processing unit (1), it delivers a sensor signal to the data processing unit (1) which indicates that it has been touched and which position coordinates the touch point has on it and in the case of positional displacements of the touch point the input surface (2) continuously transmits the absolute position data of the touch point to the data processing unit (1),
- at least one freely movable input device (3) continuously transmits its relative positional change data to the data processing unit (1) during positional displacements on a surface,
**characterized in that**
- the data processing unit (1) assigns a freely movable input device (3) to a touch point on the input surface (2) by setting a processing mark if
- the appearance of the touch point on the input surface (2) correlates in terms of time with the appearance of a signal of at least one freely movable input device (3) and when on the displacement of the touch point, the continuously transmitted absolute position data of the touch point of the input surface (2) correlates with the continuously transmitted relative positional change data from the freely movable input device (3),
- wherein after the processing mark is set, its position is continuously determined with the data processing unit (1), **in that** the data transmitted by the input surface (2) to the data processing unit (1) is matched with the data transmitted from the at least one freely movable input device (3).

2. The method in accordance with claim 1, wherein the freely movable input device has the form of a pen.

3. The method in accordance with claim 1 or claim 2, wherein the freely movable input device comprises a sensor function by means of which it is detectable whether or not the freely movable input device is in contact with a surface.

4. The method in accordance with any one of the claims 1 to 3, wherein in the case of displacement of the touch points of various freely movable input devices on the input surface (2), the input surface (2) continuously transmits the absolute position data of these various touch points.

5. The method in accordance with any one of the claims 1 to 4, wherein the freely movable input device comprises a position change sensor with a position-resolving capability which is higher than that of the input surface (2), so that position changes are detected which are too fine for the position-resolving capability of the input surface (2).

6. The method according to any one of the claims 1 to 5, wherein the touch-sensitive, position-resolving input surface (2) is a touchscreen.

7. The method according to any one of the claims 1 to 6, wherein during the input to the data processing unit (1) the absolute position of the freely movable input device measured with the input surface (2) is compared in regular intervals with the position, which calculates from the results of the positional information measured by the freely movable input device, wherein the data processing unit (1) assigns to both positions a third position through mathematical interpolation, which is spaced less from both first positions than both first positions are spaced from each other, wherein a processing mark is assigned to this third position with the data processing unit (1) and wherein this third position is assumed as starting position for the calculation of the next movement of the freely movable input device.

8. The method according to any one of the claims 1 to 7, the input surface (2) is touched with at least two freely movable input devices, wherein also the second and each further freely movable input device measures relative displacements with respect to a surface along which it is moved by means of a position change sensor in two coordinates and is in data connection with the data processing unit (1), wherein the data processing unit (1) assigns a freely movable input device to a touch point detected with the touch-sensitive, position-resolving input surface (2) when the appearance of the touch point coincides in terms of time with the appearance of a signal from the respective freely movable input device.

9. The method according to claim 8, wherein the input surface (2) is touched with at least two freely movable input devices, wherein also the second and each further freely movable input device measures relative displacements with respect to a surface along which it is moved by means of a position change sensor in two coordinates and is in data connection with the data processing unit (1), wherein the data processing unit (1) assigns each freely movable input device to that touch point detected by the touch-sensitive, position-resolving input surface (2) whose continuously transmitted absolute position data of the input surface (2) correlates with the continuously transmitted relative positional change data from the particular freely movable input device.

## Revendications

1. Procédé de fonctionnement d'une installation informatique présentant une unité de traitement de données (1), une surface de saisie (2) sensible au contact et à résolution de position raccordée à ladite unité par une liaison de transmission de données, et au moins un appareil de saisie (3) librement mobile ayant la fonctionnalité d'une souris d'ordinateur, dans lequel la surface de saisie (2) détecte la position absolue de points de contact sur la surface de saisie (2) et dans lequel le au moins un appareil de saisie (3) librement mobile détecte, en cas de mouvement le long d'une surface, ses changements de position relatifs le long de la surface à l'aide d'un capteur de changement de position dans deux coordonnées et est en liaison de données avec l'unité de traitement de données (1), dans lequel en outre
- dès que la surface de saisie (2) est touchée avec le au moins un appareil de saisie (3) en vue d'une saisie au niveau de l'unité de traitement de données (1), cette dernière émet un signal de capteur au niveau de l'unité de traitement de données (1) qui indique qu'il y a contact et indique les coordonnées de position du point de contact, et lors du déplacement du point de contact, les données de position absolues étant envoyées par la surface de saisie (2) à l'unité de traitement de données (1),
- le au moins un appareil de saisie (3) librement mobile envoyant, en cas de déplacement au niveau d'une surface, ses données de changement de position relatives à l'unité de traitement de données (1),
**caractérisé en ce que**
- l'unité de traitement de données (1) attribue un appareil de saisie librement mobile à un point de contact sur la surface de saisie (2) en déterminant un marquage de traitement, lorsque
- l'apparition du point de contact sur la surface de saisie (2) coïncide avec l'apparition d'un signal du au moins un appareil de saisie (3) librement mobile, et lorsque lors du déplacement du point de contact, les données de position absolues envoyées en continu du point de contact de la surface de saisie (2) coïncident avec les données de changement de position relatives envoyées en continu par l'appareil de saisie (3) librement mobile,
- dans lequel, après détermination du marquage de traitement, la position de ce dernier est déterminée en continu par l'unité de traitement de données (1) en comparant les données envoyées à l'unité de traitement de données (1) par la surface de saisie (2) aux données envoyées par le au moins un appareil de saisie (3) librement mobile.

2. Procédé selon la revendication 1, **caractérisé en ce que** l'appareil de saisie librement mobile se présente sous la forme d'un crayon.

3. Procédé selon la revendication 1 ou 2, **caractérisé en ce que** l'appareil de saisie librement mobile présente une fonction de capteur qui permet de détecter si l'appareil de saisie librement mobile repose ou non sur une surface.

4. Procédé selon l'une des revendications 1 à 3, **caractérisé en ce que**, lorsque l'on déplace les points de contact de plusieurs appareils de saisie librement mobiles sur la surface de saisie (2), le procédé envoie en continu les données de position absolues de ces plusieurs points de contact.

5. Procédé selon l'une des revendications 1 à 4, **caractérisé en ce que** l'appareil de saisie librement mobile présente un capteur de changement de position avec une capacité de résolution de position qui est supérieure à celle de la surface de saisie (2) de sorte qu'il est détecté des changements de position qui sont trop subtils pour la capacité de résolution de position de la surface de saisie (2).

6. Procédé selon l'une des revendications 1 à 5, **caractérisé en ce que** la surface de saisie (2) à résolution de position et sensible au contact est un écran tactile.

7. Procédé selon l'une des revendications 1 à 6, **caractérisé en ce que**, pendant la saisie sur l'unité de traitement de données (1), il est comparé à intervalles réguliers la position absolue de l'appareil de saisie librement mobile mesurée par la surface de saisie (2) à une position calculée à partir des résultats des informations de position mesurées par l'appareil de saisie, **en ce que** par l'unité de traitement de données (1), il est associé aux deux positions par interpolation mathématique une troisième position représentant les deux positions ensemble qui est moins espacée des deux premières positions que les deux premières positions le sont entre elles, **en ce qu'**il est associé à cette troisième position par l'unité de traitement de données (1) un marquage de traitement et **en ce que** cette troisième position est prise comme point de départ pour le calcul du mouvement suivant de l'appareil de saisie librement mobile.

8. Procédé selon l'une des revendications 1 à 7, **caractérisé en ce que** la surface de saisie (2) est touchée avec au moins deux appareils de saisie librement mobiles, dans lequel également le deuxième appareil de saisie et tout autre appareil de saisie librement mobile mesure les déplacements relatifs par rapport à une surface le long de laquelle il se déplace à l'aide d'un capteur de changement de position dans deux coordonnées et est en liaison de données avec l'unité de traitement de données (1), dans lequel l'unité de traitement de données (1) associe les appareils de saisie librement mobiles à chacun des points de contact détectés par la surface de saisie (2) à résolution de position et sensible au contact dont l'apparition coïncide avec l'apparition d'un signal de l'appareil de saisie librement mobile.

9. Procédé selon la revendication 8, **caractérisé en ce que** la surface de saisie (2) est touchée avec au moins deux appareils de saisie librement mobiles, dans lequel également le deuxième appareil de saisie et tout autre appareil de saisie librement mobile mesure les déplacements relatifs par rapport à une surface le long de laquelle il se déplace à l'aide d'un capteur de changement de position dans deux coordonnées et est en liaison de données avec l'unité de traitement de données (1), dans lequel l'unité de traitement de données (1) associe les appareils de saisie librement mobiles à chacun des points de contact détectés par la surface de saisie (2) à résolution de position et sensible au contact dont les données de position absolues envoyées en continu de la surface de saisie (2) coïncident avec les données de changement de position relatives envoyées en continu par l'appareil de saisie librement mobile.
